# DEMANDE DE BREVET EUROPEEN

(11) **EP 1 135 997 A1**
(43) Date de publication de la demande: **26.09.2001**
(21) Numéro de dépôt: 01490010.4
(22) Date de dépôt: 20.03.2001
(51) Int. Cl.: A23L 3/00, A23L 3/04

(54) **Enceinte de convoyage de produits, notamment pour le traitement de produits alimentaires**

(30) Priorité: 22.03.2000 FR 0003666
(71) Demandeur: Bonduelle Société Anonyme, 59173 Renescure (FR)
(72) Inventeur: Bracquart, Jacques, 59173 Renescure (FR); Maureaux, Alain, 59173 Renescure (FR)
(74) Mandataire: Duthoit, Michel

(57) **Abrégé**

L'invention concerne une enceinte de convoyage de produits, notamment pour le traitement de produits alimentaires, présentant une cavité (2), apte à recevoir le ou lesdits produits et/ou au moins un réceptacle (4) contenant le ou lesdits produits et comprenant des moyens d'entraînement (3) destinés au transport des produits et/ou des réceptacles (4) à l'intérieur de ladite cavité (2).

Selon l'invention :
- ladite enceinte (1) est constituée d'un corps (5) et d'un couvercle (6), entre lesquels ladite cavité (2) est définie,
- ladite enceinte (1) comprend des moyens de transmission (8), coopérant, d'une part, avec lesdits moyens d'entraînement (3), prévus à l'extérieur de ladite cavité (2), et, d'autre part, avec lesdits produits et/ou réceptacles (4), pour leur transport, lesdits moyens de transmission (8) se déplaçant avec lesdits produits et/ou réceptacles (4),
- ladite enceinte (1) comprend un joint fluide (7) pour permettre le passage desdits moyens de transmission (8) entre l'intérieur et l'extérieur de ladite cavité (2).

L'invention concerne également un procédé de traitement de produits alimentaires utilisant une telle enceinte.

## Description

L'invention concerne une installation de convoyage de produits ainsi que des réceptacles employés dans une telle installation, et un procédé de traitement de produits alimentaires, par exemple de légumes, utilisant une telle installation.

Bien que plus particulièrement prévue pour des légumes, le procédé conforme à l'invention pourra être employé pour traiter tout autre type de produits alimentaires. Actuellement, dans le domaine du traitement des légumes, les exigences en matière d'hygiène et/ou de propreté sont de plus en plus fortes. Cela est nécessaire si l'on souhaite augmenter leur durée de stockage.

Dans le cas de traitement thermique, certaines solutions ont déjà été développées dans ce sens par purification des fluides caloporteurs destinés à la cuisson et/ou à la stabilisation des légumes, ainsi que de l'air utilisé pour les refroidir.

Il est néanmoins nécessaire de faire en sortie que tous les éléments susceptibles de rentrer en contact avec les légumes ne soient pas source de contamination.

Il demeure ainsi un élément essentiel qui nécessite encore des améliorations vis-à-vis de la question de l'hygiène et de la propreté. Il s'agit de la tôlerie des machines de traitement employées et de leurs équipements intérieurs.

En effet, à ce jour, on utilise de nombreux types d'enceintes présentant une cavité à l'intérieur de laquelle les légumes sont déplacés pour être traités.

Néanmoins, dans ces enceintes, les moyens d'entraînement utilisés pour déplacer les légumes, qui sont le plus souvent des tapis, convoyeurs à bandes ou équivalents, sont placés à l'intérieur de la cavité, ce qui est la source de nombreux problèmes.

Le but de la présente invention est de proposer une installation de convoyage de produits, notamment pour le traitement de produits alimentaires, qui pallie les inconvénients précités et dont l'utilisation puisse se faire dans des conditions d'hygiène et de propreté améliorées, pour permettre d'augmenter leur durée de stockage, notamment leur date limite de consommation.

Un autre but de la présente invention est de proposer une installation de convoyage de produits, notamment pour le traitement de produits alimentaires, dont l'aménagement soit simple, notamment en employant une enceinte de traitement où les pièces mobiles et les zones de rétention soient presque totalement éliminées.

Un autre but de la présente invention est de proposer un procédé de traitement de produits alimentaires, notamment de légumes, qui permet de conserver leur goût et/ou leur texture.

Un autre but de la présente invention est de proposer un procédé de traitement de produits alimentaires, notamment de légumes, dont la consommation en énergie et/ou en produits de traitement reste limitée.

D'autres buts et avantages de l'invention apparaîtront au cours de la description qui va suivre qui n'est donnée qu'à titre indicatif et qui n'a pas pour but de la limiter.

L'invention concerne tout d'abord une installation de convoyage de produits, notamment pour le traitement de produits alimentaires, comprenant une enceinte, présentant une cavité apte à recevoir le ou lesdits produits et/ou au moins un réceptacle contenant le ou lesdits produits, et des moyens d'entraînement destinés au transport des produits et/ou des réceptacles à l'intérieur de ladite cavité, caractérisée par le fait que :
- ladite enceinte est constituée d'un corps et d'un couvercle, entre lesquels ladite cavité est définie,
- ladite installation comprend en outre des moyens de transmission de l'entraînement, coopérant, d'une part, avec lesdits moyens d'entraînement, prévus à l'extérieur de ladite cavité et, d'autre part, avec lesdits produits et/ou réceptacles, pour leur transport, lesdits moyens de transmission se déplaçant avec lesdits produits et/ou réceptacles,
- ladite enceinte comprend un joint fluide, séparant ledit corps et ledit couvercle, pour permettre le passage desdits moyens de transmission entre l'intérieur et l'extérieur de ladite cavité.

L'invention concerne encore un réceptacle spécialement destiné à contenir le ou lesdits produits pour leur transport dans une installation telle que décrite plus haut, ledit réceptacle présentant au moins une alvéole apte à accueillir tout ou partie desdits produits.

L'invention concerne également un procédé de traitement de produits alimentaires, notamment de légumes, dans lequel, à l'intérieur d'une installation telle que décrite plus haut, on fait circuler lesdits produits.

L'invention sera mieux comprise à la lecture de la description suivante, accompagnée des dessins en annexe, qui en font partie intégrante et parmi lesquels :
- la figure 1 est une vue réalisée selon un plan de coupe transversale illustrant de manière schématique un exemple de réalisation de l'enceinte d'une installation conforme à l'invention, vide de réceptacle,
- la figure 2 est une vue d'après la figure 1, l'enceinte accueillant cette fois des réceptacles,

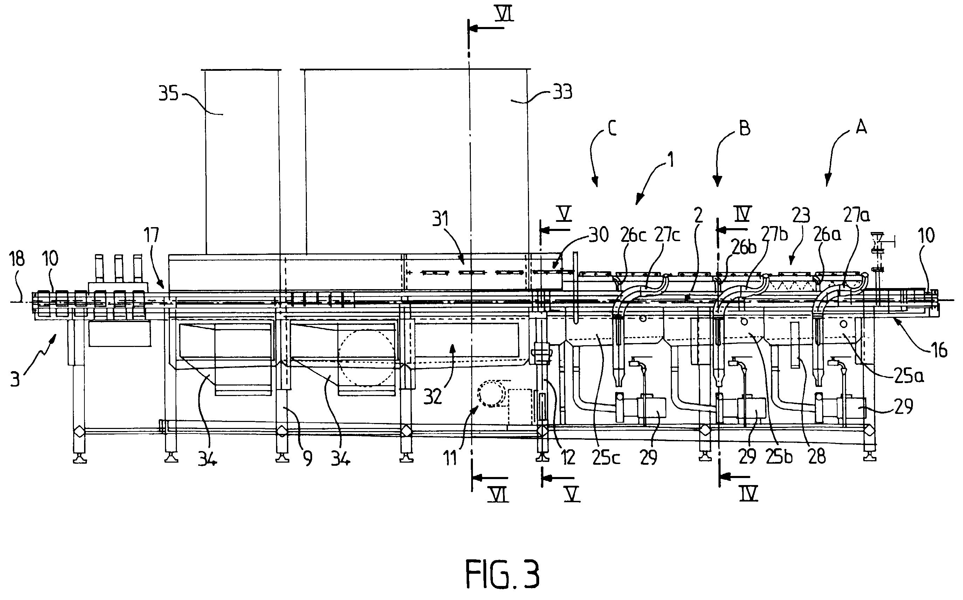

- la figure 3 est une vue de face d'une installation correspondant à un exemple de mise en oeuvre du procédé conforme à l'invention,
- la figure 4 est une vue de coupe d'après la ligne IV-IV représentée à la figure 3 précédente,
- la figure 5 est une vue de coupe d'après la ligne V-V représentée à la figure 3 précédente,
- la figure 6 est une vue de coupe d'après la ligne VI-VI représentée à la figure 3 précédente.

L'invention concerne tout d'abord une installation de convoyage de produits, notamment pour le traitement de produits alimentaires. Toutefois, bien que plus particulièrement prévue pour de telles applications, elle pourra également être utilisée dans tous les secteurs de l'activité économique dans lesquels on est amené à faire circuler des objets.

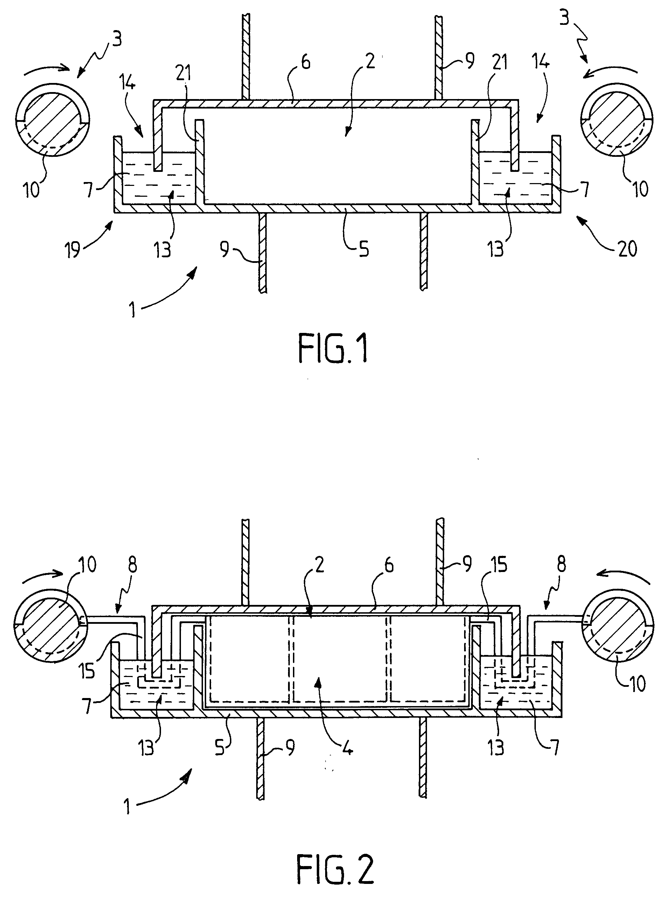

Comme illustrée aux figures 1 et 2, l'installation conforme à l'invention comprend une enceinte 1 présentant une cavité 2 apte à recevoir le ou lesdits produits et/ou au moins un réceptacle 4 contenant le ou lesdits produits, et des moyens 3 d'entraînement destinés au transport des produits et/ou des réceptacles 4 à l'intérieur de ladite cavité 2.

Selon l'invention :
- ladite enceinte 1 est constituée d'un corps 5 et d'un couvercle 6 entre lesquels ladite cavité 2 est définie,
- ladite installation 1 comprend en outre des moyens de transmission de l'entraînement 8, coopérant, d'une part, avec lesdits moyens d'entraînement 3, prévus à l'extérieur de ladite cavité 2, et, d'autre part, avec lesdits produits et/ou réceptacles 4, pour leur transport, lesdits moyens de transmission 8 se déplaçant avec lesdits produits et/ou réceptacles 4,
- ladite enceinte 1 comprend un joint fluide 7 pour permettre le passage desdits moyens de transmission 8 entre l'intérieur et l'extérieur de ladite cavité 2.

Ainsi, lesdits produits et/ou réceptacles 4 circulent dans ladite cavité 2 sous l'action desdits moyens d'entraînement 3, placée à l'extérieur, par l'intermédiaire desdits moyens de transmission 8 qui se déplacent avec eux en circulant dans le joint fluide 7.

Ladite cavité 2 ne comprend donc pas de pièces mobiles destinées à l'entraînement. De plus, ledit joint fluide 7 contribue à son étanchéité et on dispose ainsi d'une enceinte dont l'hygiène et/ou la propreté sont rendues plus simples à assurer.

Ledit corps 5 et/ou ledit couvercle 6 sont supportés, par exemple, par un châssis 9. Ledit joint fluide 7 est prévu, notamment, sur tout ou partie de la périphérie de ladite enceinte.

En se reportant également aux autres figures, on constate que lesdits moyens d'entraînement 3 sont constitués, par exemple, d'une vis sans fin 10.

Ladite vis sans fin est reliée, notamment, à un ensemble moto-réducteur 11 par une courroie 12.

Ledit corps 5 présente, par exemple, au moins une gouttière 13, apte à accueillir le fluide, notamment constitué d'eau, dudit joint fluide 7. Quant au couvercle 6, au moins une partie de ses bords 14 est prévue plongeante dans ledit fluide.

Lesdits moyens de transmission 8 sont constitués, par exemple, au moins d'un profilé 15, prévu apte à coulisser dans ladite gouttière 13 en passant de ladite cavité 2 dans ladite gouttière 13 puis sous les bords plongeants 14 du couvercle 6 pour sortir de ladite gouttière 13, extérieurement. Ils présentent ainsi, notamment, une forme d'oméga renversé.

Ladite cavité présente des parois de fond 37 par exemple inclinées et lisses, afin de faciliter l'écoulement des liquides, notamment de traitement et/ou de lavage.

Ladite enceinte 1 est munie, éventuellement, au moins d'un orifice d'entrée 16 et/ou de sortie 17 pour lesdits produits et/ou réceptacles 4, entre lesquels lesdits moyens d'entraînement 3 sont prévus aptes à déplacer ces derniers selon un axe rectiligne 18.

En outre, lesdits moyens d'entraînement 3 pourront être prolongés en amont et en aval de façon à permettre l'introduction et la sortie desdits moyens de transmission, desdits produits et/ou des réceptacles 4 de ladite cavité 2.

Ainsi, lorsque l'enceinte 1 n'est pas utilisée, la cavité 2 est entièrement vide. De plus, elle est débouchante de part et d'autre desdits orifices 16, 17, ce qui facilite son lavage.

L'enceinte 1 est en outre munie, par exemple, de moyens pour éviter la contamination de ladite cavité 2 au niveau desdits orifices d'entrée 16 et/ou de sortie 17, qui pourrait se produire en cas d'introduction d'air ambiant.

Il s'agit, notamment, d'une part, de ladite cavité 2 prévue présentant entre ladite entrée 16 et ladite sortie 17 une section sensiblement constante, au moins au voisinage dudit orifice d'entrée 16 et dudit orifice de sortie 17 et, d'autre part, desdits réceptacles 4 dont le contour est prévu apte à épouser ladite section de la cavité 2.

On peut ainsi obtenir une obturation de cette dernière par lesdits réceptacles 4 eux-mêmes, sans avoir à utiliser de sas.

Comme illustrée, la section de ladite cavité 2 pourra être sensiblement constante sur l'ensemble de sa longueur, ce qui facilitera encore son lavage.

Lesdits moyens pour éviter la contamination pourront encore être constitués, par exemple, de moyens de créations d'une lame d'air isolante, prévue soufflante de manière tangente auxdits orifices d'entrée 16 et/ou de sortie 17.

Selon le mode particulier de réalisation représenté, ladite enceinte 1 est, allongée selon ledit axe rectiligne 18 et présente deux côtés latéraux 19, 20.

Unedite vis sans fin 10 est prévue en vis-à-vis de chacun desdits côtés latéraux 19, 20 , parallèlement audit axe longitudinal 18. De même, unedite gouttière 13 est prévue le long de chacun des côtés latéraux correspondant du corps 5, parallèlement auxdites vis sans fin 10 et ledit couvercle 6 présente une jupe 21 tout le long de ses bords latéraux en vis-à-vis, qui plonge dans ledit joint fluide 7. Lesdits profilés de liaison 15 sont assujettis aux côtés latéraux desdits réceptacles 4 et passent sous ladite jupe 21 pour coopérer avec ladite vis sans fin 10.

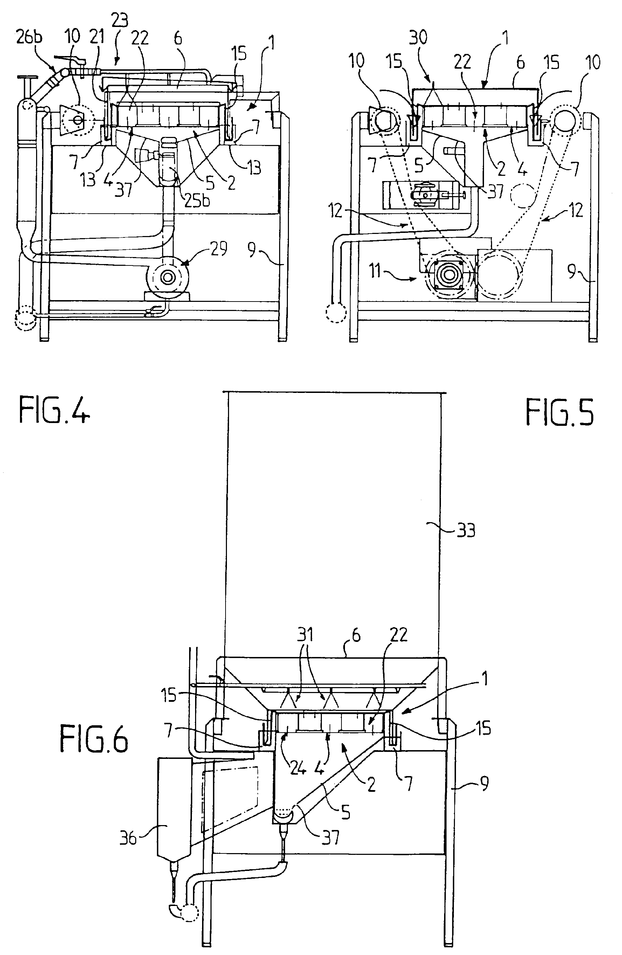

Pour alléger les figures, une seule vis sans fin a été représentée figure 4 et aucune figure 6 mais deuxdites vis sans fin sont dans chaque cas présentes.

Lesdites gouttières 13 sont éventuellement prévues très légèrement inclinées, pour permettre un écoulement dudit joint fluide 7 de manière à faciliter un renouvellement continu de celui-ci.

Les vis sans fin 10 sont, par exemple, motorisées. Pour assurer l'engrènement et le désengrènement des réceptacles 4 sur leur vis 10, ces derniers seront éventuellement munis d'aimants, notamment logés dans l'épaisseur des tôles.

Selon l'invention, comme illustrés aux figures 4 à 6, lesdits réceptacles 4 présentent au moins une alvéole 22, apte à accueillir tout ou partie desdits produits.

Chaque alvéole 22 est prévue, par exemple, perméable aux fluides, notamment de traitement et/ou de lavage.

Pour cela, lesdites alvéoles sont, par exemple, prévues ouvertes à leur extrémité supérieure et munies d'orifices au niveau de leur fond opposé 24 afin de permettre l'introduction des fluides par le haut et leur évacuation par le bas.

Le fond 24 de chaque alvéole 22 pourra en outre être amovible de façon à autoriser la vidange des produits.

Pour cela, le ou lesdits fonds 24 présentent, notamment, au niveau d'un au moins de leur bord des moyens de fermeture/ouverture de l'alvéole, constitués d'un aimant.

Plus précisément, le fond 24 de chacune des alvéoles 22 pourra être constitué d'une trappe, articulée sur l'un des quatre côtés de l'alvéole, chaque trappe étant maintenue en position fermée par undit aimant.

On évite ainsi le positionnement de tout système mécanique quelconque de fermeture et, par suite, les risques d'encrassement et de rétention bactérienne qu'il pourrait provoquer.

Pour effectuer la manoeuvre d'ouverture des alvéoles, un piston piloté vient décoller simultanément toutes les trappes d'un même réceptacle. Le pistonnage s'effectue à l'extérieur de chaque alvéole. Ceci permet donc d'effectuer un transfert rapide, direct et très hygiénique au vu du produit.

Ce transfert aura lieu, par exemple, en sortie de l'enceinte, dans une zone microbiologiquement contrôlée, notamment grâce à l'utilisation de la lame d'air précédemment évoquée. Les produits sont évacués par le dessous des alvéoles directement dans des emballages, non représentés, positionnés de manière précise sous celles-ci.

L'invention concerne également un procédé de traitement de produits alimentaires, par exemple de légumes, dans lequel, à l'intérieur d'une enceinte 1, telle que celle décrite plus haut, on fait circuler lesdits produits..

On transporte lesdits produits dans ladite enceinte 1 par exemple à l'aide desdits réceptacles 4, notamment, après introduction de ceux-ci dans ladite cavité 2 par ledit orifice d'entrée 16 et jusqu'à leur sortie par ledit orifice de sortie 17, à chaque cycle de traitement, lesdits réceptacles pouvant être utilisés en circuit fermé.

Lesdits produits sont destinés en sortie, éventuellement, à être conditionnés dans des emballages de capacité donnée. Pour faciliter ce résultat, lesdites alvéoles 22, pourront accueillir chacune une quantité de produits correspondant à ladite capacité.

Avant d'être transférés dans les alvéoles 22, les produits sont éventuellement prédosés, en pondéral, en fonction de la quantité voulue en fin de process.

Comme illustrés, lesdits réceptacles 4 sont, par exemple, allongés dans une direction sensiblement perpendiculaire à leur direction d'entraînement 18 et sont munis de trois dites alvéoles 22, placées côte à côte dans ladite direction perpendiculaire.

Le traitement desdits produits pourra consister, par exemple, en un apport calorifique, notamment pour le blanchiment de légumes, par aspersion d'un fluide caloporteur, notamment de l'eau, que l'on fait entrer en contact direct avec lesdits produits.

L'aspersion est réalisée, par exemple, à l'aide d'une succession de buses 23, placées parallèlement les unes aux autres et destinées à se trouver en vis-à-vis des extrémités ouvertes desdites alvéoles 22, qui défilent en vis-à-vis.

Selon un mode particulier de réalisation de l'invention, on réalise ladite aspersion selon différentes zones successives A, B, C et on alimente chaque zone A, B, C par un fluide caloporteur d'origine distincte, une partie au moins du fluide caloporteur ayant servi à alimenter une zone aval étant recirculé pour alimenter une zone amont. Les notions d'amont et d'aval sont données par le sens d'entraînement desdits réceptacles 4.

Avec un tel mode de réalisation, on évite une surconsommation de fluide caloporteur en fonctionnant selon un circuit semi-fermé qui évite par ailleurs de recontaminer les produits déjà traités.

En effet, dans chaque zone A, B, C, le fluide provient soit de la recirculation du fluide de la zone en question, soit de la recirculation du fluide d'une zone moins chargée en impuretés puisque situé en aval et ayant donc servi à traiter des produits déjà moins chargés en impuretés.

Pour cela, ladite enceinte 1 présente un fond, par exemple, subdivisé en trois cuves 24a, 24b, 24c côte à côte, chacune étant munie d'un circuit de recirculation interne 26a, 26b, 26c et d'un circuit de recirculation aval vers amont 27a, 27b, 27c.

Au cas où le fluide caloporteur nécessiterait de nouveaux réglages des taux d'impuretés, tout ou partie desdites cuves 25a, 25b, 25c est munie d'un orifice de vidange 28. L'alimentation en fluide caloporteur s'effectue, notamment, par une arrivée prévue dans la zone C la plus en aval. Sa circulation est assurée par des pompes foulantes aspirantes 29.

Selon un exemple de mise en oeuvre du procédé conforme à l'invention, après ledit apport calorifique, on refroidit lesdits produits. Pour cela, on procède, par exemple, en deux étapes. Tout d'abord, on réalise une aspersion avec un liquide, notamment de l'eau, de manière à descendre la température desdits produits en dessous d'une température donnée, puis on fonctionne par brumisation, c'est-à-dire par combinaison d'une aspersion et d'une aspiration.

Avec un tel mode de réalisation, on peut ainsi obtenir lors de la phase d'aspersion une descente rapide en température afin de ne pas maintenir les produits alimentaires traités dans une zone de température favorable au développement des bactéries pendant une période de temps allongée, puis on finit de les refroidir selon un rythme plus doux, par brumisation.

La phase d'aspersion est réalisée, par exemple, par des secondes buses 30 prévues en aval des premières buses d'aspersion 23 pour l'apport calorifique.

La brumisation est réalisée, par exemple, par des troisièmes buses 31 prévues en aval desdites secondes buses 30. Lesdites troisièmes buses 31 sont prévues, ainsi que lesdites premières et secondes buses 23, 29, dans la partie supérieure de la cavité 2, en vis-à-vis de la trajectoire desdits réceptacles 4.

Pour la brumisation, en partie basse de la cavité 2 et en regard desdites troisièmes buses de refroidissement 31, des ventilateurs 32 sont prévus, lesdits réceptacles 4 passant entre lesdites troisièmes buses d'aspersion 31 et lesdits ventilateurs 32 au niveau du liquide brumisé.

Selon un mode de réalisation particulier de l'invention, on aspire dans ladite cavité 2 de l'air filtré. Pour cela, on dispose au-dessus de ladite enceinte 1 des filtres d'air 33.

Le refroidissement par brumisation pourra s'effectuer, par exemple, en plusieurs étapes successives, de nombre variable en fonction de la température finale souhaitée pour le produit. Pour cela, on fait varier le nombre de troisièmes buses 31 et de ventilateurs 32 placés les uns à la suite des autres dans le sens de déplacement desdits réceptacles 4.

Selon l'invention, on pourra encore, éventuellement, sécher lesdits produits après leur refroidissement. On effectue une telle opération, par exemple, par aspiration.

Pour cela, en aval des premiers ventilateurs 32 pour la brumisation, on dispose, en partie basse de la cavité 2, des seconds ventilateurs 34.

Comme pour la brumisation, le séchage pourra être effectué avec de l'air filtré. Les filtres sont éventuellement communs avec ceux 33 utilisés pour la brumisation.

Comme pour le refroidissement, le séchage pourra être effectué en plusieurs étapes successives par utilisation les uns à la suite des autres dans le sens de progression des réceptacles 4 d'unités d'aspiration constituées dedits seconds ventilateurs 34 et dedits filtres 35 supplémentaires prévus en vis-à-vis, respectivement en parties basse et haute de ladite cavité 2.

Afin de récolter l'eau recueillie lors des différentes opérations d'aspiration, l'installation pour la mise en oeuvre du procédé conforme à l'invention pourra comprendre, notamment, des pièges à eau 36, reliés au fond de ladite cavité 2.

A ce sujet, on évacue le ou les liquides de ladite cavité 2, par exemple, grâce à ses parois de fond 37. On évite ainsi les stagnations.

A titre de remarque, il est à noter que le joint fluide 7 intervient dans le rendement de la brumisation et du séchage en favorisant l'aspiration nécessaire à leur mise en oeuvre.

De plus, comme déjà évoqué, lesdits réceptacles 4 pourront présenter un contour épousant la section transversale de ladite cavité 2, ce qui contribuera à l'obturation de celle-ci. Pour améliorer encore un tel résultat, on pourra introduire lesdits réceptacles les uns au contact des autres dans ladite cavité 2.

Lesdits réceptacles pourront encore être lavés avant chaque passage dans l'enceinte 1, lors de leur retour entre la sortie et l'entrée de celle-ci après vidange des produits traités. On utilise pour cela une laveuse en continu. Lors de ce retour, les trappes des alvéoles seront maintenues ouvertes.

On obtient ainsi un état sanitaire correct des réceptacles avant qu'ils ne soient chargés à nouveau de produits à traiter.

Naturellement, d'autres modes de mise en oeuvre, à la portée de l'homme de l'art, auraient pu être envisagés sans pour autant sortir du cadre de l'invention.

## Revendications

1. Installation de convoyage de produits, notamment pour le traitement de produits alimentaires, comprenant au moins une enceinte (1), présentant une cavité (2) apte à recevoir le ou lesdits produits et/ou au moins un réceptacle (4) contenant le ou lesdits produits, et des moyens (3) d'entraînement destinés au transport des produits et/ou des réceptacles (4) à l'intérieur de ladite cavité (2), **caractérisée par** le fait que :
- ladite enceinte (1) est constituée d'un corps (5) et d'un couvercle (6), entre lesquels ladite cavité (2) est définie,
- ladite installation (1) comprend en outre des moyens de transmission de l'entraînement (8), coopérant, d'une part, avec lesdits moyens d'entraînement (3), prévus à l'extérieur de ladite cavité (2), et, d'autre part, avec lesdits produits et/ou réceptacles (4), pour leur transport, lesdits moyens de transmission (8) se déplaçant avec lesdits produits et/ou réceptacles (4),
- ladite enceinte (1) comprend un joint fluide (7), séparant ledit corps (5) et ledit couvercle (6) pour permettre le passage desdits moyens de transmission (8) entre l'intérieur et l'extérieur de ladite cavité (2).

2. Installation, selon la revendication 1, dans laquelle lesdits moyens d'entraînement (3) sont constitués d'une vis sans fin (10).

3. Installation, selon la revendication 1, dans laquelle ledit corps (5) présente au moins une gouttière (13), apte à accueillir ledit fluide, au moins une partie des bords dudit couvercle (6) plongeant dans ledit fluide, définissant de la sorte ledit joint (7).

4. Installation, selon la revendication 3, dans laquelle, lesdits moyens de transmission (8) sont constitués, au moins d'un profilé (15), prévu apte à coulisser dans ladite gouttière (13) en passant de ladite cavité (2) dans ladite gouttière (13), puis sous lesdits bords plongeant du couvercle (6) pour sortir de ladite gouttière (13), extérieurement.

5. Installation, selon la revendication 1, dans laquelle ladite cavité présente des parois de fond (37) inclinées et lisses, afin de faciliter l'écoulement des liquides.

6. Installation, selon la revendication 1, munie au moins d'un orifice d'entrée (16) et de sortie (17) pour lesdits produits et/ou lesdits réceptacles (4) entre lesquels lesdits moyens d'entraînement (3) sont prévus aptes à déplacer ces derniers, selon un axe rectiligne, lesdits moyens d'entraînement (3) étant prolongés en amont et en aval de façon à permettre l'introduction et la sortie desdits moyens de transmission, desdits produits et/ou desdits réceptacles (4) de ladite cavité (2).

7. Installation, selon la revendication 6, munie de moyens pour éviter la contamination de ladite cavité (2) par introduction d'air ambiant au niveau desdits orifices d'entrée (16) et/ou de sortie (17).

8. Réceptacle (4) spécialement destiné à contenir le ou lesdits produits pour leur transport dans une installation selon l'une quelconque des revendications précédentes, présentant au moins une alvéole (22) apte à accueillir tout ou partie desdits produits.

9. Réceptacle selon la revendication 8, dans lequel chaque alvéole est prévue perméable au fluide.

10. Réceptacle selon la revendication 8, dans lequel chaque alvéole est munie d'un fond amovible pour la vidange de son contenu.

11. Réceptacle selon la revendication 10, dans lequel le ou lesdits fonds présentent un niveau d'un au moins de leur bords des moyens de fermeture/ouverture de l'alvéole constitués d'un aimant.

12. Installation, selon la revendication 7, et réceptacles (4), selon l'une quelconque des revendications 8 à 11 précédentes, lesdits moyens pour éviter la contamination étant constitués, d'une part, de ladite cavité (2) de ladite installation, prévue présentant entre ladite entrée (16) et ladite sortie (17), une section sensiblement constante, au moins au voisinage dudit orifice d'entrée (16) et dudit orifice de sortie (17), et, d'autre part, desdits réceptacles (4) dont le contour est prévu apte à épouser ladite section.

13. Procédé de traitement de produits alimentaires, par exemple de légumes, dans lequel, à l'intérieur d'une installation (1) selon l'une quelconque des revendications 1 à 7 ou 12 précédentes, on fait circuler lesdits produits.

14. Procédé, selon la revendication 13, dans lequel on transporte lesdits produits dans ladite enceinte (1) à l'aide de réceptacles selon l'une quelconque des revendications 8 à 11 précédentes.

15. Procédé, selon la revendication 14, dans lequel lesdits produits sont destinés en sortie à être conditionnés dans des emballages de capacité donnée et dans lequel lesdites alvéoles (22) des réceptacles (4) accueillent chacune une quantité de produits correspondant à ladite capacité.

16. Procédé, selon la revendication 13 ou 14, dans lequel on réalise un apport calorifique, par aspersion d'un liquide caloporteur que l'on fait entrer en contact direct avec lesdits produits.

17. Procédé, selon la revendication 16, dans lequel on réalise ladite aspersion selon différentes zones successives, et on alimente chaque zone par un fluide caloporteur d'origine distincte, une partie au moins du fluide caloporteur, ayant servi à alimenter une zone aval, étant recirculé pour alimenter une zone amont.

18. Procédé, selon la revendication 13 ou 14, dans lequel, après ledit apport calorifique, on refroidit lesdits produits.

19. Procédé, selon la revendication 18, dans lequel on refroidit à l'aide d'un liquide lesdits produits en deux étapes :
- tout d'abord par aspersion de manière à descendre la température desdits produits en dessous d'une température donnée,
- puis par brumisation.

20. Procédé selon la revendication 19, dans lequel le refroidissement par brumisation se fait en plusieurs étapes successives, de nombre variable en fonction de la température finale souhaitée pour le produit.

21. Procédé, selon la revendication 18, dans lequel on sèche lesdits produits après leur refroidissement.

22. Procédé, selon la revendication 21, dans lequel on sèche lesdits produits par aspiration.

23. Procédé, selon la revendication 14, dans lequel lesdits réceptacles sont introduits les uns au contact des autres au niveau dudit orifice d'entrée (16).

24. Procédé, selon la revendication 14, dans lequel lesdits réceptacles (4) décrivent un circuit fermé et sont lavés avant chaque passage dans ladite enceinte (1).

25. Procédé, selon la revendication 15, dans lequel les produits sont prédosés avant transfert dans lesdites alvéoles (22).
